# EUROPEAN PATENT SPECIFICATION

(11) **EP 3 530 997 B1**
(45) Date of publication and mention of the grant of the patent: **11.08.2021**
(21) Application number: 17861724.7
(22) Date of filing: 12.10.2017
(51) Int. Cl.: F16K 37/00, B29C 45/83, F16N 29/00, F16N 29/04

(54) **SYSTEM FOR MANAGING FLOW-STATE OF FLUID**
SYSTEM ZUR VERWALTUNG DES STRÖMUNGSZUSTANDES EINES FLUIDS
SYSTÈME DE GESTION DE L'ÉTAT D'ÉCOULEMENT DE FLUIDE

(30) Priority: 18.10.2016 JP 2016204192
(43) Date of publication of application: 28.08.2019
(73) Proprietor: Lube Corporation, Shinjuku-ku Tokyo 169-0051 (JP)
(72) Inventor: WADA, Koichi, Tokyo 169-0051 (JP)
(74) Representative: Liebetanz, Michael
(86) International application number: PCT/JP2017/037012
(87) International publication number: WO 2018/074321

(56) References cited:
- EP-A1- 0 439 626
- AT-A4- 509 983
- JP-A- 2013 024 286
- JP-U- H0 622 695
- JP-U- H0 622 695
- JP-U- S5 316 743

## Description

### [Technical Field]

The invention relates to a system for managing a flow-state of fluid, the system for managing a flow-state of fluid managing a flow-state of fluid made up of a lubricant, such as grease or oil, flowing through a pipeline of a lubrication device as a fluid feeding device provided in an industrial machine, such as an injection molding machine, a machine tool or the like.

### [Background Art]

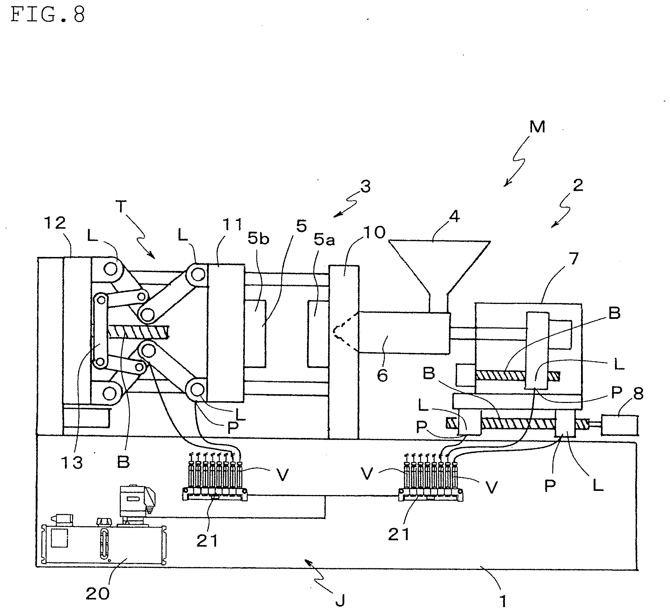

In general, as shown in Figure 8, in an injection molding machine M, for example, a lubrication device J as a fluid feeding device is mounted. The injection molding machine M includes an injection unit 2 and a mold clamp unit 3 on a machine base 1. The injection unit 2 includes an injection cylinder 6 that heats and melts a resin from a hopper 4 and injects the resin to a mold 5 of the mold clamp unit 3 with a screw not shown. The injection unit 2 includes a rotation mechanism that rotationally drives a screw in the injection cylinder 6, and an injection drive section 7 including a ball screw mechanism B that moves the screw back and forth, and also includes a back-and-forth movement drive section 8 including a ball screw mechanism B that moves the injection cylinder 6 back and forth. The mold clamp unit 3 is configured to include a fixed platen 10 that is fixed onto the machine base 1 and supports a fixed mold 5a, a movable platen 11 that is movable in an axial direction with respect to the fixed platen 10 and supports a movable mold 5b, a toggle mechanism T that is provided between the movable platen 11 and a rear side platen 12 and drives the movable platen 11 in a mold closing direction or a mold opening direction, and a drive unit 13 including a ball screw mechanism B that drives the toggle mechanism T.

In the injection molding machine M, a lubricant, such as grease or oil is supplied to required lubrication sites L by the lubrication device J mounted on the injection molding machine M. The lubrication sites L are provided in respective spots such as rotating portions constituted of shafts and bearings of the toggle mechanism T, and meshing portions constituted of screw shafts and nuts meshed with the screw shafts via balls of the ball screw mechanisms B. As shown in Figure 8, for example, the lubrication device J, in which a plurality of quantitative valves V operated by applying and reducing the pressure of the lubricant are connected to a lubricant pump 20 for feeding the lubricant via a junction 21, intermittently supplies the lubricant to the lubrication sites L from the quantitative valves V through lubrication ports P, the lubrication ports P in hole shapes being formed in machine members provided with the lubrication sites L. For example, the lubrication port P of the toggle mechanism T is formed in a housing that holds the bearing, and the lubrication port P of the ball screw mechanism B is formed in the nut. Several different amounts of flow per shot through the quantitative valve V are prepared ranging from 0.005 cc to 1 cc, for example, and one or more among these amounts are selected and piped in conformity with lubrication sites L.

In the lubrication device J, safety is ensured by managing the flow-state of the lubricant flowing in the oil supply piping from the quantitative valves V to the lubrication sites L, and checking whether or not the lubricant is normally supplied to the lubrication sites L. The system for managing a flow-state of fluid that is the lubricant can use a flow detector such as one disclosed in Patent Literature 1, for example.

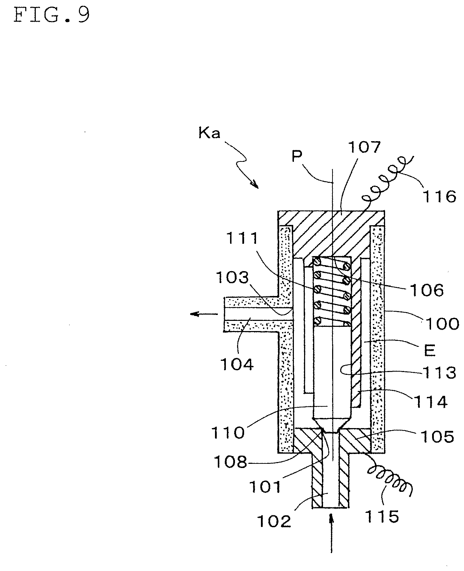

As shown in Figure 9, a flow detector Ka includes a body 100 made up of an insulator having a fluid space E having a cylindrical inner surface allowing a fluid to pass therethrough. A fluid supply port 102 having a supply aperture 101 centered on the central axis P of the fluid space E at one end of the fluid space E is formed in this body 100. A fluid discharge port 104 having a discharge aperture 103 communicating with the fluid space E is formed on a side of the body 100. A formation member of the supply aperture 101 forming the supply aperture 101 is configured as one electrode 105 made up of a conductor. The body 100 is provided with another electrode 107 that has an exposure part 106 exposed on the other side of the fluid space E, is insulated from the one electrode 105 and is made up of a conductor. A valve member 110 which is made up of a conductor is stored in the fluid space E. The valve member 110 is moved along the central axis P of the fluid space E to come into contact with an aperture edge 108 of the supply aperture 101 and closes the supply aperture 101 and to be apart from the supply aperture 101 and open the supply aperture 101. A coil spring 111 which is made up of a conductor is stored in the fluid space E. One end of the coil spring 111 is connected to the valve member 110. Other end of the coil spring 111 is connected to the exposure part 106 of the other electrode 107. The coil spring 111 always urges the valve member 110 in a direction of closing the supply aperture 101. A cylindrical guide member 114 whose axis is on the axis line along the central axis P of the fluid space E is fixed to the other electrode 107. The guide member 114 has a slide hole 113 in which the valve member 110 having a protruding distal end 112 is slidably inserted, and which stores one end side of the coil spring 111 on a base end side. The flow detecting device Ka configures what is called a check valve in which the valve member 110 opens and closes.

The fluid state management system using the flow detecting device Ka connects the flow detecting device Ka to a management unit not shown via wiring 115 connected to the one electrode 105 and via wiring 116 connected to the other electrode 107. The management unit always applies a voltage to an electric circuit configured by the one electrode 105, the valve member 110, the coil spring 111 and the other electrode 107. The fluid state management system detects the flow of the fluid by electrically detecting connection when the valve member 110 of the electric circuit is closed, and disconnection when the valve member 110 is opened.

A system for managing a flow-state of fluid with the features of the preamble of claim 1 is known from Patent Literature 2, i.e. JP H06 22695 U.

Patent Literature 3 discloses a lubricating device for an injection molding machine with a container for lubricant, a feed line for lubricant from the container to a lubrication point of the injection molding machine, a drain line for lubricant from the lubrication point and an inlet quantity measuring device for lubricant in the inlet line, a lubricant quantity measuring device being arranged after the lubrication point.

Patent Literature 4 discloses a method of and device for enabling automatic and timely feeding of lubricant to mechanisms of a machine driven by a motor. An amount of increase in driving electric current for the mold-clamping servomotor in the course of change from an appropriate lubrication state to an inappropriate one in the mold-clamping mechanism of an injection molding machine is predetermined for every combination of the kind of an injection molding machine, conditions for injection molding, and kind of grease. A control device, in response to grease feeding time judging instruction, drives a grease pump when a detected motor current in the specific displaced position of the movable platen exceeds the standard value.

### [Citation List]

### [Patent Literature]

[Patent Literature 1] JP. S53-16743 U
[Patent Literature 2] JP H06 22695 U
[Patent Literature 3] AT 509 983 A4
[Patent Literature 4] EP 0 439 626 A1

### [Summary of Invention]

### [Technical Problem]

Unfortunately, according to the fluid state management system using the aforementioned fluid flow detecting device Ka, for example, the lubrication device J as the flow feeding device has a problem in that even when a trouble occurs due to piping leak, breakage of grease supply piping, adherence of the lubricant in the valves at a time of detecting the flow of the lubricant by connecting the flow detecting device Ka to lubricant supply piping extending from the quantitative valve V to the lubrication site L, a small amount of lubricant flows, or an excessive amount of lubricant flows, and the flow detecting device Ka detects the flow of the lubricant and can determine the flow as normal. Consequently, it is conceivable to calculate the opening/closing time of the valve member 110 of the flow detecting device Ka, and to determine the case where the opening/closing time is short or the case where the opening/closing time is too long as abnormal.

However, even when the lubrication device J functions normally, when the temperature of the fluid rises, viscosity is reduced to increase flowability, and therefore the opening/closing time of the valve member 110 decreases. On the other hand, when the temperature of the fluid lowers, viscosity increases to reduce flowability, and the opening/closing time of the valve member 110 increases. As a result, it cannot be determined whether the opening/closing time of the valve member 110 is due to a malfunction of the lubrication device J, or due to the temperature, and a problem of unreliability in determination arises.

The invention has been made in view of the above problem, and has an object to provide a system for managing a flow-state of fluid that allows abnormality of a fluid feeding device to be determined based on a length of an opening/closing time of a valve member by preventing an increase and decrease of an opening/closing time of the valve member due to a temperature from being determined as abnormal.

### [Solution to Problem]

To achieve such an object, a system for managing a flow-state of fluid of the invention is a system for managing a flow-state of fluid, including
a flow detector that includes a body having a fluid space which is supplied with a fluid fed from a fluid feeding device from a supply aperture, by drive of the fluid feeding device, and discharges the fluid from a discharge aperture, houses in the fluid space of the body, a valve member that closes the supply aperture when the fluid is not supplied, and opens the supply aperture when the fluid is supplied, and detects a flow of the fluid by opening and closing of the valve member, and
a management unit that detects opening and closing of the valve member of the flow detector and manages a flow state of the fluid in the fluid space of the body,
wherein the system includes a temperature sensor that senses a temperature of the fluid,
wherein the management unit is configured to include opening/closing detection means that detects opening and closing of the valve member of the flow detector, detection time specifying means that specifies a detection time of the opening/closing detection means, actual opening/closing time calculation means that calculates a time until the opening/closing detection means detects closing after the opening/closing detection means detects opening as an actual opening/closing time when the opening/closing detection means detects the opening of the valve member of the flow detector and detects the closing of the valve member of the flow detector within a detection time specified by the detection time specifying means, correlation storage means that stores a correlation between the temperature of the fluid and a proper opening/closing time range which is proper of the valve member, proper time range derivation means that derives a proper opening/closing time range in a corresponding temperature stored in the correlation storage means from the temperature sensed by the temperature sensor, opening/closing time determination means that determines whether the actual opening/closing time calculated by the actual opening/closing time calculation means is within or outside the proper opening/closing time range derived by the proper time range derivation means, and abnormal signal transmission means that transmits an abnormal signal when the opening/closing time determination means determines the actual opening/closing time as outside the proper opening/closing time range.

Accordingly, when the fluid is supplied by drive of the fluid feeding device, in the flow detector, the fluid acts on the valve member in the body to open the valve member, the fluid flows into the fluid space from the supply aperture to be discharged from the discharge aperture, and when supply of the fluid is stopped, the valve member returns to close the supply aperture. The flow detector detects the flow of the fluid by opening and closing of the valve member. The temperature sensor senses the temperature of the fluid.

In the management unit, the opening/closing detection means detects opening and closing of the valve member of the flow detector. Furthermore, the detection time specifying means specifies the detection time of the opening/closing detection means, and when the opening/closing detection means detects opening of the valve member of the flow detector and detects closing of the valve member within the specified detection time, the actual opening/closing time calculation means calculates the time until the opening/closing detection means detects closing after the opening/closing detection means detects opening as the actual opening/closing time.

In the correlation storage means, the correlation between the fluid temperature and the proper opening/closing time range which is proper of the valve member is stored. The proper time range derivation means derives the proper opening/closing time range in the temperature sensed by the temperature sensor from the correlation storage means.

The opening/closing time determination means determines whether the actual opening/closing time calculated by the actual opening/closing time calculation means is within or outside the proper opening/closing time range derived by the proper time range derivation means, and when the opening/closing time determination means determines the actual opening/closing time is within the range, the opening/closing time determination means determines it as normal, and when the opening/closing time determination means determines the actual opening/closing time is outside the range, the abnormal signal transmission means transmits an abnormal signal.

Consequently, since it is determined whether the actual opening/closing time of the valve member is within or outside the proper opening/closing time range correlated with the fluid temperature, and the proper opening/closing time range is set with the increase and decrease of the opening/closing time of the valve member due to the temperature taken into consideration, an abnormality of the fluid feeding device is enabled to be determined based on the length of the opening/closing time of the valve member without determining the increase and decrease of the opening/closing time of the valve member due to the temperature as abnormal. When the actual opening/closing time of the valve member is still determined as outside the proper opening/closing time range even though the increase and decrease of the opening/closing time of the valve member due to the temperature is taken into consideration, it can be determined that a certain trouble occurs to the fluid feeding device. As a result, reliability of management of the flow-state of the fluid can be enhanced.

As required, the proper time range derivation means is configured to include minimum value derivation means that derives a minimum value of a proper opening/closing time range from a temperature sensed by the temperature sensor, minimum value storage means that successively updates the minimum value derived by the minimum value derivation means and stores the minimum value, maximum value derivation means that derives a maximum value of the proper opening/closing time range from a temperature sensed by the temperature sensor, and maximum value storage means that successively updates the maximum value derived by the maximum value derivation means and stores the maximum value. The opening/closing time determination means is configured to include a function of determining whether or not the actual opening/closing time is smaller than the minimum value stored in the minimum value storage means, and including a function of determining whether or not the actual opening/closing time is larger than the maximum value stored in the maximum value storage means. The abnormal signal transmission means is configured to include a function of transmitting an abnormal signal when the opening/closing time determination means determines that the actual opening/closing time is smaller than the minimum value or larger than the maximum value.

As required, the management unit includes preliminary valve member detection means that detects whether or not the valve member of the flow detector is closed before drive of the fluid feeding device, and the abnormal signal transmission means is configured to include a function of transmitting an abnormal signal when the preliminary valve member detection means detects that the valve member of the flow detector is not closed. Accordingly, when the valve member of the flow detector is kept open due to a certain malfunction, the fluid feeding device can be determined as abnormal, and reliability of management of the flow-state of the fluid can be more enhanced.

Furthermore, as required, the management unit includes detection error recognition means that recognizes a detection error when the opening/closing detection means does not detect opening of the valve member of the flow detector within a time specified by the detection time specifying means or does not detect closing even when the opening/closing detection means detects opening. The abnormal signal transmission means is configured to include a function of transmitting an abnormal signal when the detection error recognition means recognizes a detection error. Accordingly, when opening of the valve member of the flow detector is not detected, it can be recognized, for example, as an abnormality where the fluid is not supplied due to piping leak or the like. Furthermore, when closing is not detected even though opening of the valve member of the flow detector is detected, it can be recognized as an abnormality where the fluid is excessively supplied, for example. Consequently, reliability of management of the flow-state of the fluid can be much more enhanced.

Furthermore, as required, the detection time specifying means is configured by a timer that is operated based on drive of the fluid feeding device, and has an operation time as a detection time set thereto. The detection time can be reliably set.

Furthermore, as required, the flow detector includes a body having a fluid space having a cylindrical inner surface allowing a fluid to pass therethrough. A supply port of fluid that has a supply aperture centered on a central axis of the fluid space, at one end of the fluid space, is formed in the body. A discharge port of fluid that has a discharge aperture communicating with the fluid space is formed in the body. One electrode that has a contact exposed on one end side of the fluid space and is made up of a conductor is provided in the body. Another electrode that has an exposure part exposed on another end side of the fluid space, is insulated from the one electrode and is made up of a conductor is provided in the body. A valve member that is moved along the central axis of the fluid space, comes in contact with the contact of the one electrode to close the supply aperture, comes apart from the contact to open the supply aperture, and is made up of a conductor is stored in the fluid space. A coil spring that is connected to the valve member at one end and is connected to the exposure part of the other electrode at another end to always urge the valve member in a direction of closing the supply aperture, and is made up of a conductor is stored in the fluid space. The flow detector is configured to detect flow of the fluid by electrically detecting connection when the valve member of an electric circuit configured by the one electrode, the valve member, the coil spring and the other electrode is closed, and disconnection when the valve member is opened.

According to the flow detector, by connecting the supply port and the discharge port to a pipeline where the fluid flows, and connecting wiring from the management unit to the one electrode and the other electrode, and by always applying a voltage to the electric circuit configured by the one electrode, the valve member, the coil spring and the other electrode and the like, the management unit electrically detects connection when the valve member of the electric circuit is closed, and disconnection when the valve member is opened. That is, when the fluid is supplied from the supply port, the fluid flows into the fluid space from the supply aperture, the fluid acts on the valve member, and the valve member is opened. On the other hand, when supply of the fluid from the supply port is stopped, the valve member is moved to one end face side of the fluid space by the urging force of the coil spring, and the valve member closes the supply aperture.

As required, the temperature sensor is configured to be attached to the flow detector. The fluid temperature may be sensed by the temperature sensor in any site. When the temperature sensor is attached to the flow detector, the temperature of the fluid that directly acts on the valve member can be sensed, and therefore the correlation between the fluid temperature and the valve member can be grasped as accurately as possible.

Furthermore, the flow detector is configured to be provided with a fastening portion for fastening the temperature sensor. The temperature sensor can be reliably attached.

### [Advantageous Effects of Invention]

As described above, according to the invention, since it is determined whether the actual opening/closing time of the valve member is within or outside the proper opening/closing time range correlated with the fluid temperature, and the proper opening/closing time range is set with the increase and decrease of the opening/closing time of the valve member due to the temperature taken into consideration, an abnormality of the fluid feeding device can be determined based on the length of the opening/closing time of the valve member without determining the increase and decrease of the opening/closing time of the valve member due to the temperature as abnormal. As a result, reliability of management of the flow state of the fluid can be enhanced.

### [Brief Description of Drawings]

[Figure 1] Figure 1 shows a system for managing a flow-state of fluid according to an embodiment of the invention with a lubrication device to which the system for managing a flow-state of fluid is applied.
[Figure 2] Figure 2 is a perspective view showing an example of attaching a flow detector used in the system for managing a flow-state of fluid according to the embodiment of the invention to a lubrication site.
[Figure 3] Figure 3 is a sectional view showing the flow detector used in the system for managing a flow-state of a fluid according to the embodiment of the invention.
[Figure 4] Figure 4 is a sectional view showing an example of attaching the flow detector used in the system for managing a flow-state of fluid according to the embodiment of the invention to a lubrication site.
[Figure 5] Figure 5 is a block diagram showing a configuration of a management unit of the system for managing a flow-state of fluid according to the embodiment of the invention.
[Figure 6] Figure 6 is a graph showing one example of a correlation between a temperature of a fluid and a proper opening/closing time range that is proper of a valve member in the system for managing a flow-state of fluid according to the embodiment of the invention.
[Figure 7] Figure 7 is a flowchart showing a process flow of the management unit in the system for managing a flow-state of fluid according to the embodiment of the invention.
[Figure 8] Figure 8 is an example of a configuration of an injection molding machine to which the system for managing a flow-state of fluid according to the embodiment of the invention is applied.
[Figure 9] Figure 9 is a sectional view showing an example of the conventional flow detector.

### [Description of Embodiment]

Hereinafter, referring to the accompanying drawings, a system for managing a flow-state of fluid according to an embodiment of the invention is described.

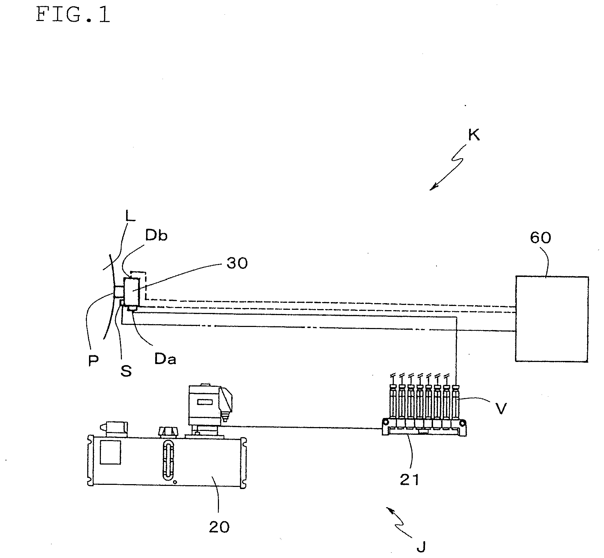

A system K for managing a flow-state of fluid according to the embodiment shown in Figures 1 to 5 is applied to a lubrication device J as a fluid feeding device that is mounted on an injection molding machine M described above.

As shown in Figure 8, the injection molding machine M includes an injection unit 2 and a mold clamp unit 3 that are provided on a machine base 1. The injection unit 2 includes an injection cylinder 6 that heats and melts a resin from a hopper 4 and injects the resin to a mold 5 of the mold clamp unit 3 by a screw not shown. The injection unit 2 includes an injection drive section 7 including a rotation mechanism that rotationally drives a screw in the injection cylinder 6 and a ball screw mechanism B that moves the screw back and forth, and includes a back-and-forth movement drive section 8 including a ball screw mechanism B that moves the injection cylinder 6 back and forth. The mold clamp unit 3 is configured to include a fixed platen 10 that supports a fixed mold 5a and is fixed onto the machine base 1, a movable platen 11 that supports a movable mold 5b movable in an axial direction with respect to the fixed platen 10, a toggle mechanism T that is provided between the movable platen 11 and a rear side platen 12 and drives the movable platen 11 in a mold closing direction or a mold opening direction, and a drive unit 13 including a ball screw mechanism B that drives the toggle mechanism T.

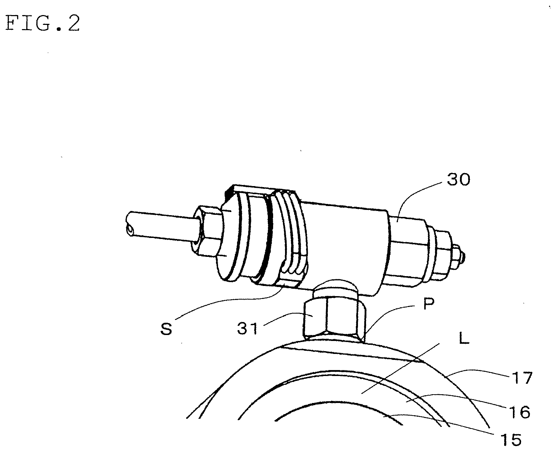

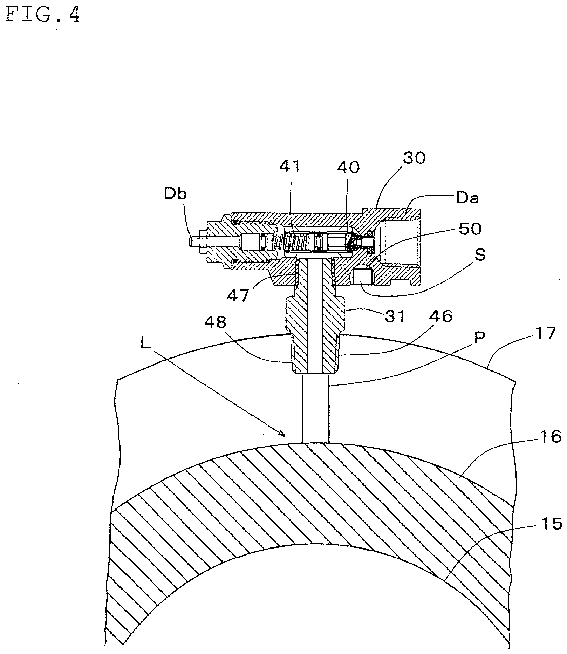

As also shown in Figure 2 and Figure 4, by the lubrication device J, a lubricant such as grease or oil is supplied to a required lubrication site L. The lubrication site L is supplied with the lubricant through hole-shaped lubrication port P formed in a machine member provided with the lubrication site L, and is provided in each of locations such as rotation portions constituted of shafts 15 and bearings 16 of the toggle mechanism T, and meshing portions (not shown) constituted of screw shafts and nuts meshed with the screw shafts via balls of the ball screw mechanisms B. In the toggle mechanism T, the lubrication port P is formed in a housing 17 as a machine member covering the bearing 16, and the lubrication port P is formed in the nut in the ball screw mechanism B.

In Figures 2 and 4, the lubrication site L is the rotation portion constituted of the shaft 15 and the bearing 16 of the toggle mechanism T, and illustration of the meshing portion constituted of the screw shaft and the nut meshed with the screw shaft via the ball of the ball screw mechanism B is omitted.

As shown in Figures 1 and 8, the lubrication device J, for example, in which a plurality of quantitative valves V operated by applying and reducing the lubricant pressure are connected to a lubricant pump 20 for feeding a lubricant via a junction 21, intermittently supplies the lubricant to the lubrication site L from the quantitative valve V through the hole-shaped lubrication port P. Several different amounts of flow per shot through the quantitative valve V are prepared ranging from 0.005 cc to 1 cc, for example, and one or more among these amounts are selected and piped in conformity with the lubrication sites L. The lubricant pump 20 is driven and controlled by a management unit 60 described later. An intermittent time of the lubricant pump 20 is set at a predetermined time, and, for example, the intermittent time is set by a timer included by the management unit 60. Furthermore, an operation time of the lubricant pump 20 is also set at a proper time in which all the quantitative valves V can operate, and, for example, the operation time is set by the timer.

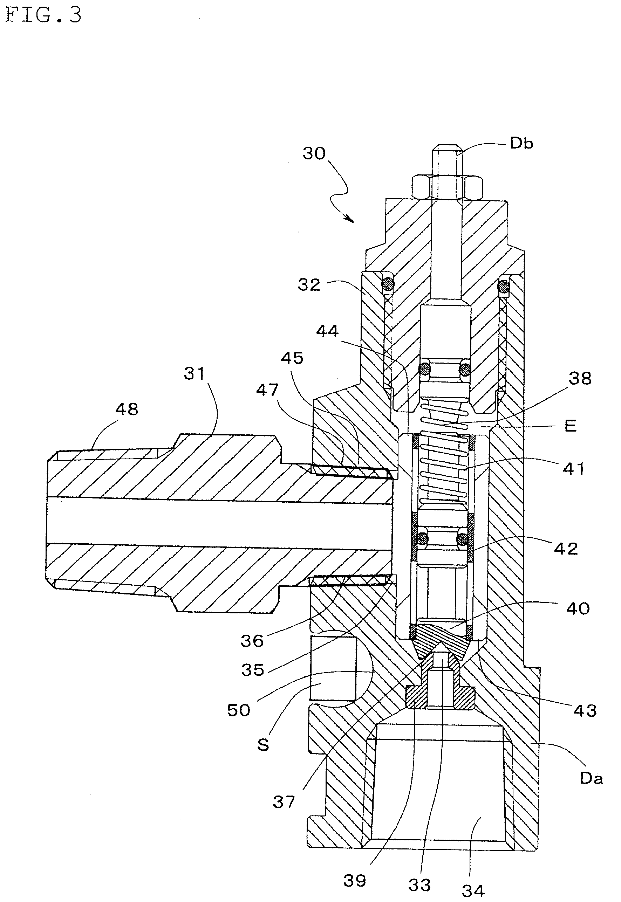

The system K for managing a flow-state includes a flow detector 30 that detects whether or not the lubricant is reliably supplied to the lubrication site L from the quantitative valve V. As shown in Figures 1 to 4, the flow detector 30 is attached to the hole-shaped lubrication port P via an adaptor 31. In detail, as shown in Figure 3, the flow detector 30 includes a body 32 that has a fluid space E having a cylindrical inner surface allowing the lubricant to pass therethrough. In the body 32, a lubricant supply port 34 having a supply aperture 33 centered on a central axis of the fluid space E at one end of the fluid space E is formed, and in the body 32, a lubricant discharge port 36 that has a discharge aperture 35 communicating with the fluid space E and is connected to a flow path of the adaptor 31 is formed. Furthermore, in the body 32, one electrode Da that has a contact 37 which is exposed on one end side of the fluid space E and is made up of a conductor is provided, and another electrode Db that has an exposure part 38 that is exposed on another end side of the fluid space E, is insulated from the one electrode Da, and is made up of a conductor is provided. The body 32 includes a bush 39 that forms the supply aperture 33 and is made up of a conductor such as a metal, and the one electrode Da is configured such that the bush 39 and/or surroundings of the bush 39 is the contact 37 which is exposed on the one end side of the fluid space E.

Furthermore, in the fluid space E, a valve member 40 that is made up of a conductor, is moved along a center axis of the fluid space E, comes into contact with the contact 37 of the one electrode Da to close the supply aperture 33, and comes apart from the contact 37 to open the supply aperture 33, is stored. Furthermore, in the fluid space E, a coil spring 41 that is made up of a conductor, is connected to the valve member 40 at one end while being connected to the exposure part 38 of the other electrode Db at another end, and always urges the valve member 40 in a direction of closing the supply aperture 33, is stored. Furthermore, in the flow detector 30, a guide member 42 that is made up of an insulator such as a resin, and is attached to the valve member 40 and is provided in the fluid space E is included. The guide member 42 is formed to secure the flow path of the lubricant from the supply aperture 33 to the discharge aperture 35 while being slidable on the cylindrical inner surface of the fluid space E, and is configured to have a reception surface 43 facing one end face of the fluid space E while receiving the lubricant from the supply aperture 33, and have a top surface 44 facing another end face of the fluid space E.

Accordingly, this flow detector 30 is configured to be able to detect the flow of the lubricant by electrically detecting connection when the valve member 40 is closed and disconnection when this member is opened in the electric circuit that is configured by the one electrode Da, the valve member 40, the coil spring 41 and the other electrode Db. The flow detector 30 is connected to the lubrication port P via the adaptor 31. In detail, at the discharge port 36 of the flow detector 30, a female thread 45 is formed, while a female thread 46 is formed at the lubrication port P, and the adaptor 31 is configured to have a flow path in a center thereof, have a male thread 47 that is screwed onto the female thread 45 of the discharge port 36, formed at one side in an axial direction, and has a male thread 48 that is screwed onto the female thread 46 of the lubrication port P formed at another side in the axial direction. Accordingly, the adaptor 31 attaches the flow detector 30 to the lubrication site L by having the male thread 47 at one side screwed onto the discharge port 36, and having the male thread 48 at the other side screwed onto the female thread 46 of the lubrication port P.

Furthermore, the system K for managing a flow-state includes a temperature sensor S that senses a temperature of a lubricant as a fluid. As the temperature sensor S, a well-known temperature sensor of a type in which an output voltage rises according to the temperature is used. The temperature sensor S is attached to the flow detector 30. In the flow detector 30, a fastening portion 50 for fastening the temperature sensor S is formed, and the temperature sensor S is fastened to the fastening portion 50. The fastening portion 50 is formed by a recessed site, and the temperature sensor S is inserted into the recessed site and is fastened by fastening means such as a screw or an adhesive.

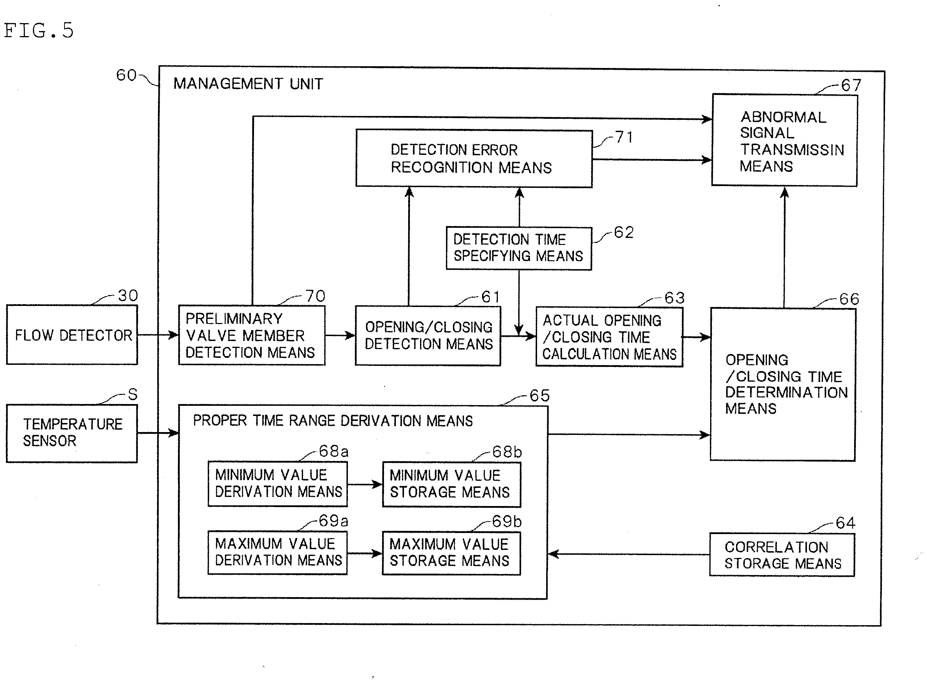

Furthermore, as shown in Figures 1 and 5, the system K for managing a flow state includes the management unit 60 that manages a flow state of the lubricant as a fluid in the fluid space E of the body 32 of the flow detector 30 based on a sensing signal from the flow detector 30, and the temperature sensor S. The management unit 60 is realized by a function of a CPU or the like, and as shown in Figure 5, includes opening/closing detection means 61 that detects opening and closing of the valve member 40 of the flow detector 30, detection time specifying means 62 that specifies a detection time of the opening/closing detection means 61, actual opening/closing time calculation means 63 that calculates a time until the opening/closing detection means 61 detects closing after detecting opening as an actual opening/closing time, when the opening/closing detection means 61 detects opening of the valve member 40 of the flow detector 30 and detects closing within a detection time specified by the detection time specifying means 62, correlation storage means 64 that stores a correlation between the temperature of the lubricant and a proper opening/closing time range which is proper of the valve member 40, proper time range derivation means 65 that derives the proper opening/closing time range in the corresponding temperature stored in the correlation storage means 64, opening/closing time determination means 66 that determines whether the actual opening/closing time calculated by the actual opening/closing time calculation means 63 is within or outside the proper opening/closing time range derived by the proper time range derivation means 65, and abnormal signal transmission means 67 that transmits an abnormal signal when the opening/closing time determination means 66 determines the actual opening/closing time as outside the proper opening/closing time range. When an abnormal signal is transmitted, for example, drive of the injection unit 2 and the mold clamp unit 3 is stopped, or a warning lamp is lit, or an alarm is activated.

In the management unit 60, a voltage is always applied to the electric circuit configured by the one electrode Da, the valve member 40, the coil spring 41 and the other electrode Db of the flow detector 30, and the opening/closing detection means 61 electrically detects connection when the valve member 40 of the electric circuit is closed, and disconnection when the valve member 40 is opened. Furthermore, the detection time of the opening/closing detection means 61 that is specified by the detection time specifying means 62 is set at a same time as the operation time of the lubricant pump 20, or a required time shorter than the operation time of the lubricant pump 20. In the embodiment, the detection time specifying means 62 is configured by a timer that is operated based on drive of the lubrication device J, and has the operation time of the lubricant pump 20 as the detection time set thereto.

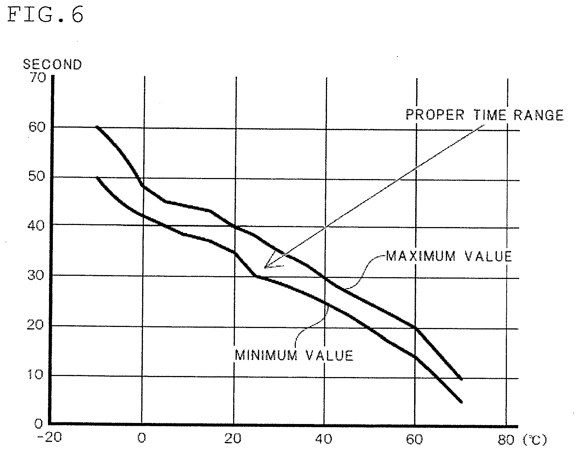

The correlation between the temperature of the lubricant and the proper opening/closing time range which is proper of the valve member 40, which is stored by the correlation storage means 64 differs at each of the lubrication sites according to the kind of the lubricant, the discharge amount of the quantitative valve V and the like, and therefore is set in advance by performing a test for each of the lubrication sites L. Figure 6 shows one example thereof. A minimum value and a maximum value of the proper opening/closing time range are obtained with respect to a temperature change.

The proper time range derivation means 65 is configured to include minimum value derivation means 68a that derives a minimum value of the proper opening/closing time range from a temperature sensed by the temperature sensor S, minimum value storage means 68b that successively updates the minimum value derived by the minimum value derivation means 68a and store the minimum value, maximum value derivation means 69a that derives a maximum value of the proper opening/closing time range from the temperature detected by the temperature sensor S, and maximum value storage means 69b that successively updates the maximum value derived by the maximum value derivation means 69a and stores the maximum value.

Furthermore, the opening/closing time determination means 66 is configured to include a function of determining whether or not the actual opening/closing time is smaller than the minimum value stored by the minimum value storage means 68b, and include a function of determining whether or not the actual opening/closing time is larger than the maximum value stored by the above described maximum value storage means 69b. In the embodiment, the opening/closing time determination means 66 determines that the actual opening/closing time is not smaller than the minimum value when the actual opening/closing time has a same value as the minimum value, and determines the actual opening/closing time is not larger than the maximum value when the actual opening/closing time has a same value as the maximum value. Furthermore, the abnormal signal transmission means 67 is configured to include a function of transmitting an abnormal signal when the opening/closing time determination means 66 determines that the actual opening/closing time is smaller than the minimum value or larger than the maximum value.

Furthermore, the management unit 60 is configured to include preliminary valve member detection means 70 that detects whether or not the valve member 40 of the flow detector 30 is closed before drive of the lubrication device J. In the embodiment, the preliminary valve member detection means 70 is set to function, for example, several seconds before a predetermined time when the intermittent time at which the lubricant pump 20 is operated arrives. In the management unit 60, a voltage is always applied to the electric circuit configured by the one electrode Da, the valve member 40, the coil spring 41 and the other electrode Db of the flow detector 30, and the preliminary valve member detection means 70 electrically detects connection when the valve member 40 of the electric circuit is closed, and disconnection when the valve member 40 is opened. The abnormal signal transmission means 67 is configured to include a function of transmitting an abnormal signal when the preliminary valve member detection means 70 detects that the valve member 40 is not closed.

Furthermore, the management unit 60 is configured to include detection error recognition means 71 that recognizes a detection error when the opening/closing detection means 61 does not detect opening of the valve member 40 of the flow detector 30 within the time specified by the detection time specifying means 62, or when the opening/closing detection means 61 detects opening but does not detect closing. The abnormal signal transmission means 67 is configured to include a function of transmitting an abnormal signal when the detection error recognition means 71 recognizes a detection error.

The flow detectors 30 which are used in the injection molding machine are assigned with numbers, and the abnormal signal transmission means 67 includes a function of also outputting the number of the flow detector 30 relating to an abnormality with the abnormal signal.

Furthermore, the management unit 60 also includes a function of also performing operation control of the lubricant pump 20 of the lubrication device J as described above. Furthermore, the management unit 60 can also include a function of always comparing the temperature sensed by the temperature sensor S and a predetermined temperature, determining a temperature as normal when the temperature does not reach the predetermined temperature, and determines a temperature as abnormal when the temperature is the predetermined temperature or more, and transmitting an abnormal signal when determining the temperature as abnormal. The predetermined temperature is set at a temperature, for example, 120°C, at which it is feared that the shaft 15 causes seizure that is so-called scoring to the bearing 16 in the toggle mechanism T, and the screw shaft causes seizure that is so-called scoring to the ball and the nut in the ball screw mechanism B, for example. Accordingly, when a malfunction occurs to the machine itself and causes an abnormality, for example, when the shaft 15 causes seizure that is so-called scoring to the bearing 16 in the toggle mechanism T, and the screw shaft causes seizure that is so-called scoring to the ball and the nut in the ball screw mechanism B, during operation of the injection molding machine M, the abnormality can be recognized.

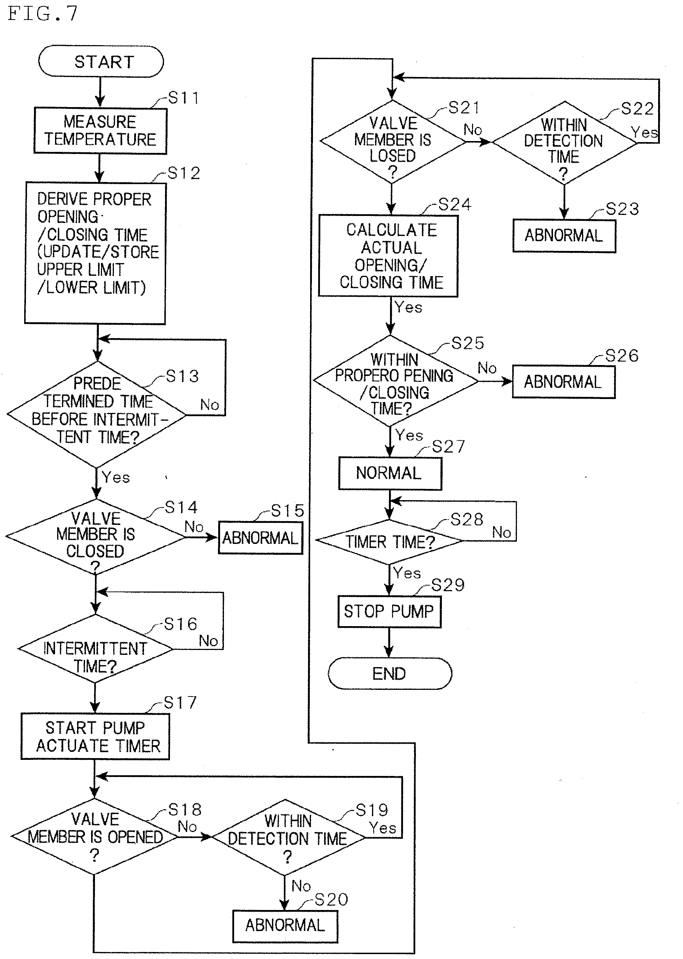

Accordingly, in the injection molding machine M, the injection unit 2 and the mold clamp unit 3 are driven to perform injection molding. During drive of the injection molding machine M, the lubricant pump 20 of the lubrication device J operates by control of the system K of managing a flow-state and the management unit 60 thereof. With use of a flowchart shown in Figure 7, a process that is performed in each of the flow detectors 30 is described. In the flow detector 30, the temperature sensor S performs temperature sensing (S11). In the management unit 60, the proper time range derivation means 65 drives the proper opening/closing time range in the corresponding temperature stored on the correlation storage means 64 from the temperature sensed by the temperature sensor S (S12). Specifically, in the proper time range derivation means 65, the minimum value derivation means 68a derives the minimum value of the proper opening/closing time range from the temperature sensed by the temperature sensor S, and the minimum value storage means 68b successively updates the minimum value derived by the minimum value derivation means 68a and stores the minimum value. Furthermore, the maximum value derivation means 69a derives the maximum value of the proper opening/closing time range from the temperature sensed by the temperature sensor S, and the maximum value storage means 69b successively updates the maximum value derived by the maximum value derivation means 69a and stores the maximum value.

When it is a predetermined time before the intermittent time (S13 Yes), the preliminary valve member detection means 70 detects whether or not the valve member 40 of the flow detector 30 is closed. When the preliminary valve member detection means 70 detects that the valve member 40 is not closed (S14 No), the abnormal signal transmission means 67 transmits an abnormal signal (S15). Accordingly, when the valve member 40 of the flow detector 30 is kept open due to a certain malfunction, it can be determined as abnormal, and reliability of management of a flow-state of fluid can be enhanced.

When the preliminary valve member detection means 70 detects closing, it is determined as normal, the flow goes to a next step (S14 Yes), and when the intermittent time arrives (S16 Yes), the lubricant pump 20 is driven and the timer operates (S17). Accordingly, the lubricant is discharged from the respective quantitative valves V, and the lubricant is supplied to the lubrication sites L through the flow detector 30. In the flow detector 30, the lubricant acts on the valve member 40 in the body 32 and the valve member 40 opens, the lubricant flows into the fluid space E from the supply aperture 33 and is discharged from the discharge aperture 35, and when supply of the lubricant is stopped, the valve member 40 returns to close the supply aperture 33. The flow detector 30 senses the flow of the lubricant by opening and closing of the valve member 40.

In the management unit 60, the opening/closing detection means 61 firstly detects opening of the valve member 40 of the flow detector 30 (S18). When the opening/closing detection means 61 does not detect opening of the valve member 40 of the flow detector 30 within the time specified by the detection time specifying means 62 in this case (S18 No, S19 No), the detection error recognition means 71 recognizes it as a detection error, and the abnormal signal transmission means 67 transmits an abnormal signal (S20). Accordingly, for example, an abnormality where the lubricant is not supplied due to piping leak or the like is recognized.

Furthermore, when the opening/closing detection means 61 detects opening of the valve member 40 of the flow detector 30 (S18 Yes), the opening/closing detection means 61 detects closing of the valve member 40 of the flow detector 30 this time (S21). When the opening/closing detection means 61 does not detect closing of the valve member 40 of the flow detector 30 within the time specified by the detection time specifying means 62 in this case (S21 No, S22 No), the detection error recognition means 71 recognizes it as a detection error, and the abnormal signal transmission means 67 transmits an abnormal signal (S23). Accordingly, for example, an abnormality where the lubricant is excessively supplied can be recognized. Consequently, reliability of management of the flow state of the lubricant can be more enhanced.

When the opening/closing detection means 61 detects closing of the valve member 40 of the flow detector 30 (S21 Yes), opening of the valve member 40 of the flow detector 30 is detected and closing of the valve member 40 of the flow detector 30 is detected within the specified detection time, and therefore the actual opening/closing time calculation means 63 calculates the time until closing is detected after opening is detected as the actual opening/closing time (S24). Next, the opening/closing time determination means 66 determines whether the actual opening/closing time calculated by the actual opening/closing time calculation means 63 is within or outside the proper opening/closing time range which is derived by the proper time range derivation means 65 (S25). That is, the opening/closing time determination means 66 determines whether or not the actual opening/closing time is smaller than the minimum value stored in the minimum value storage means 68b, and determines whether or not the actual opening/closing time is larger than the maximum value stored in the maximum value storage means 69b.

When the opening/closing time determination means 66 determines that the actual opening/closing time is smaller than the minimum value or larger than the maximum value, the opening/closing time determination means 66 determines that the actual opening/closing time is outside the proper opening/closing time range (S25 No). Then the abnormal signal transmission means 67 transmits an abnormal signal (S26). When the opening/closing time determination means 66 determines that the actual opening/closing time is within the proper opening/closing time range, the opening/closing time determination means 66 determines it as normal (S25 Yes, S27). Consequently, since it is determined whether the actual opening/closing time of the valve member 40 is within or outside the proper opening/closing time range correlated with the temperature of the lubricant, and the proper opening/closing time range is set with increase and decrease of the opening/closing time of the valve member 40 due to the temperature taken into consideration, an abnormality of the lubrication device can be determined based on the length of the opening/closing time of the valve member 40 without determining the increase and decrease of the opening/closing time of the valve member 40 due to the temperature as abnormal. When the actual opening/closing time is still smaller than the minimum value, or larger than the maximum value even though the increase or decrease of the opening/closing time of the valve member 40 due to the temperature is taken into consideration, it can be determined that a very small amount of lubricant flows, or an excessive amount of lubricant flow, and a certain trouble occurs, due to piping leak, breakage of grease supply piping, adherence of the lubricant in the valve or the like. As a result, reliability of the management of a flow-state of lubricant can be enhanced.

When the opening/closing time determination means 66 determines the actual opening/closing time as normal (S27), and the detection time specified by the timer ends (S28Yes), the lubricant pump 20 is stopped (S29), and the flow is ended. Subsequently, a next intermittent time is waited. The series of determination is performed for each of the flow detectors 30, and when any one of the flow detectors 30 has an abnormality, an abnormal signal is transmitted with the number of the flow detector 30 relating to the abnormality by the abnormal signal transmission means 67, and, for example, drive of the injection unit 2 and the mold clamp unit 3 is stopped, or a warning lamp is lit or an alarm is activated.

In the above described embodiment, the flow detectors 30 and the temperature sensors S do not have to be provided in all of the lubrication sites L, and may be provided in only required sites. Furthermore, in the above described embodiment, the temperature sensor S is attached to the flow detector 30, but the temperature sensor S does not have to be necessarily attached to the flow detector 30, and may be provided in another site such as an inside of a tank, or the sites may be arbitrarily changed, for example, as long as there is the correlation between the opening/closing time of the valve member 40 and the temperature of the lubricant. Furthermore, the lubrication sites L are not limited to the aforementioned sites, but may be provided in any sites as a matter of course.

### [Reference Signs List]

- K: System for managing flow-state of fluid
- M: Injection molding machine
- J: Lubrication device (fluid feeding device)
- B: Ball screw mechanism
- T: Toggle mechanism
- L: Lubrication site
- P: Lubrication port
- 20: Lubricant pump
- V: Quantitative valve
- 30: Flow detector
- 31: Adaptor
- E: Fluid space
- 32: Body
- 33: Supply aperture
- 34: Supply port
- 35: Discharge aperture
- 36: Discharge port
- 37: Contact
- 38: Exposure part
- Da: One electrode
- Db: Other electrode
- 39: Bush
- 40: Valve member
- 41: Coil spring
- 42: Guide member
- S: Temperature sensor
- 50: Fastening portion
- 60: Management unit
- 61: Opening/closing detection means
- 62: Detection time specifying means
- 63: Actual opening/closing time calculation means
- 64: Correlation storage means
- 65: Proper time range derivation means
- 66: Opening/closing time determination means
- 67: Abnormal signal transmission means
- 68a: Minimum value derivation means
- 68b: Minimum value storage means
- 69a: Maximum value derivation means
- 69b: Maximum value storage means
- 70: Preliminary valve member detection means
- 71: Detection error recognition means

## Claims

1. A system for managing a flow-state of fluid (K), comprising a flow detector (30) that includes a body (32) having a fluid space (E) which is supplied with a fluid fed from a fluid feeding device (J) from a supply aperture (33), by drive of the fluid feeding device (J), and discharges the fluid from a discharge aperture (35) housing in the fluid space (E) of the body (32), a valve member (40) configured to close the supply aperture (33) when the fluid is not supplied, and to open the supply aperture (33) when the fluid is supplied, and detects a flow of the fluid by opening and closing of the valve member (40), and
a management unit (60) for detecting opening and closing of the valve member (40) of the flow detector (30) and for managing a flow state of the fluid in the fluid space (E) of the body (32),
wherein the system includes a temperature sensor (S) for sensing a temperature of the fluid,
**characterized in that**
the management unit (60) comprises
opening/closing detection means (61) for detecting opening and closing of the valve member (40) of the flow detector (30),
detection time specifying means (62) for specifying a detection time of the opening/closing detection means (61),
actual opening/closing time calculation means (63) for calculating a time until the opening/closing detection means (61) detects closing after the opening/closing detection means (61) detects opening as an actual opening/closing time, when the opening/closing detection means (61) detects the opening of the valve member (40) of the flow detector (30) and detects the closing of the valve member (40) of the flow detector (30) within a detection time specified by the detection time specifying means (62),
correlation storage means (64) for storing a correlation between the temperature of the fluid and a proper opening/closing time range which is proper of the valve member (40),
proper time range derivation means (65) for deriving a proper opening/closing time range in a temperature sensed by the temperature sensor (S) from the correlation storage means (64),
opening/closing time determination means (66) for determining whether the actual opening/closing time calculated by the actual opening/closing time calculation means (63) is within or outside the proper opening/closing time range derived by the proper time range derivation means (65), and
abnormal signal transmission means (67) for transmitting an abnormal signal when the opening/closing time determination means (66) determines the actual opening/closing time as outside the proper opening/closing time range.

2. The system for managing a flow-state of fluid (K) according to claim 1,
wherein the proper time range derivation means (65) is configured to include
minimum value derivation means (68a) for deriving minimum value of the proper opening/closing time range from a temperature sensed by the temperature sensor (S),
minimum value storage means (68b) for successively updating the minimum value derived by the minimum value derivation means (68a) and for storing the minimum value,
maximum value derivation means (69a) for deriving a maximum value of the proper opening/closing time range from a temperature sensed by the temperature sensor (S), and
maximum value storage means (69b) for successively updating the maximum value derived by the maximum value derivation means (69a) and for storing the maximum value,
wherein the opening/closing time determination means (66) is configured to include a function of determining whether or not the actual opening/closing time is smaller than the minimum value stored in the minimum value storage means (68b), and include a function of determining whether or not the actual opening/closing time is larger than the maximum value stored in the maximum value storage means (69b), and
wherein the abnormal signal transmission means (67) is configured to include a function of transmitting an abnormal signal when the opening/closing time determination means (66) determines that the actual opening/closing time is smaller than the minimum value or larger than the maximum value.

3. The system for managing a flow-state of fluid (K) according to claim 1 or 2,
wherein the management unit (60) includes preliminary valve member detection means (70) for detecting whether or not the valve member (40) of the flow detector (30) is closed before drive of the fluid feeding device (J), and
the abnormal signal transmission means (67) is configured to include a function of transmitting an abnormal signal when the preliminary valve member detection means (70) detects that the valve member (40) of the flow detector (30) is not closed.

4. The system for managing a flow-state of fluid (K) according to any one of claims 1 to 3,
wherein the management unit (60) includes detection error recognition means (71) for recognizing a detection error when the opening/closing detection means (61) does not detect opening of the valve member (40) of the flow detector (30) within a time specified by the detection time specifying means (62) or does not detect closing even when the opening/closing detection means (61) detects opening, and
wherein the abnormal signal transmission means (67) is configured to include a function of transmitting an abnormal signal when the detection error recognition means (71) recognizes a detection error.

5. The system for managing a flow-state of fluid (K) according to any one of claims 1 to 4,
wherein the detection time specifying means (62) is configured by a timer that is operated based on drive of the fluid feeding device (J) and has an operation time as a detection time set thereto.

6. The system for managing a flow-state of fluid (K) according to any one of claims 1 to 5,
wherein the flow detector (30) includes a body (32) having a fluid space (E) having a cylindrical inner surface allowing a fluid to pass therethrough,
a supply port (34) of fluid that has a supply aperture (33) centered on a central axis of the fluid space (E) at one end of the fluid space (E), is formed in the body (32),
a discharge port of fluid that has a discharge aperture (35) communicating with the fluid space (E) is formed in the body (32),
one electrode (Da) that has a contact exposed on one end side of the fluid space (E) and is made up of a conductor is provided in the body (32),
another electrode that has an exposure part (38) exposed on another end side of the fluid space (E), is insulated from the one electrode (Da) and is made up of a conductor is provided in the body (32),
a valve member (40) that is moved along the central axis of the fluid space (E), comes in contact with the contact of the one electrode (Da) to close the supply aperture (33), comes apart from the contact to open the supply aperture (33), and is made up of a conductor is stored in the fluid space (E),
a coil spring (41) that is connected to the valve member (40) at one end and is connected to the exposure part (38) of the other electrode (Db) at another end to always urge the valve member (40) in a direction of closing the supply aperture (33), and is made up of a conductor is stored in the fluid space (E),
and the flow detector (30) is configured to detect flow of the fluid by electrically detecting connection when the valve member (40) of an electric circuit configured by the one electrode (Da), the valve member (40), the coil spring (41) and the other electrode (Db) is closed, and disconnection when the valve member (40) is opened.

7. The system for managing a flow-state of fluid (K) according to any one of claims 1 to 6,
wherein the temperature sensor (S) is attached to the flow detector (30).

8. The system for managing a flow-state of fluid (K) according to claim 6,
wherein the flow detector (30) is provided with a fastening portion (50) for fastening the temperature sensor (S).

## Patentansprüche

1. System zur Verwaltung eines Strömungszustandes eines Fluids (K), umfassend einen Strömungsdetektor (30), der einen Körper (32) mit einem Fluidraum (E) aufweist, der durch den Antrieb einer Fluidzuführungsvorrichtung (J) über eine Zuführungsöffnung (33) mit einem Fluid versorgt wird, das von der Fluidzuführungsvorrichtung (J) zugeführt wird, und der das Fluid aus einer im Fluidraum (E) des Körpers (32) untergebrachten Auslassöffnung (35) ausgibt, ein Ventilelement (40), das derart konfiguriert ist, dass es die Zuführungsöffnung (33) schliesst, wenn das Fluid nicht zugeführt wird, und dass es die Zuführungsöffnung (33) öffnet, wenn das Fluid zugeführt wird, und das es einen Fluss des Fluids durch Öffnen und Schliessen des Ventilelements (40) erfasst, und
eine Verwaltungseinheit (60) zum Erfassen des Öffnens und Schliessens des Ventilelements (40) des Strömungsdetektors (30) und zum Verwalten eines Strömungszustands des Fluids in dem Fluidraum (E) des Körpers (32),
wobei das System einen Temperatursensor (S) zum Erfassen einer Temperatur des Fluids enthält,
**dadurch gekennzeichnet, dass**
die Verwaltungseinheit (60) umfasst
eine Öffnungs-/Schliessungs-Erfassungseinrichtung (61) zum Erfassen des Öffnens und des Schliessens des Ventilelements (40) des Strömungsdetektors (30),
ein Erfassungs-Zeit-Festlegungsmittel (62) zum Festlegen einer Erfassungszeit der Öffnungs-/Schliessungs-Erfassungseinrichtung (61),
eine Berechnungseinrichtung (63) für die tatsächliche Öffnungs-/Schliessungs-Zeit zum Berechnen einer Zeit, bis die Öffnungs-/Schliess-Erfassungseinrichtung (61) das Schliessen detektiert, nachdem die Öffnungs-/Schliess-Erfassungseinrichtung (61) das Öffnen detektiert hat, als eine tatsächliche Öffnungs-/Schliessungs-Zeit, wenn die Öffnungs-/Schliess-Erfassungseinrichtung (61) das Öffnen des Ventilelements (40) des Strömungsdetektors (30) detektiert und das Schliessen des Ventilelements (40) des Strömungsdetektors (30) innerhalb einer Erfassungszeit detektiert, die durch das Erfassungs-Zeit-Festlegungsmittel (62) festgelegt ist,
ein Korrelationsspeichermittel (64) zum Speichern einer Korrelation zwischen der Temperatur des Fluids und einem korrekten Öffnungs-/Schliessungs-Zeitbereich, der dem Ventilelement (40) eigen ist,
eine Eigenzeitbereichs-Ableitungseinrichtung (65) zum Ableiten eines Eigen-Öffnungs-/Schliessungs-Zeitbereichs in einer von dem Temperatursensor (S) erfassten Temperatur aus dem Korrelationsspeichermittel (64),
eine Öffnungs-/Schliessungs-Zeit-Bestimmungseinrichtung (66) zum Bestimmen, ob die tatsächliche Öffnungs-/Schliessungs-Zeit, die durch die Berechnungseinrichtung (63) für die tatsächliche Öffnungs-/Schliessungs-Zeit berechnet wird, innerhalb oder ausserhalb des Eigen-Öffnungs-/Schliessungs-Zeitbereichs liegt, der durch die Ableitungseinrichtung (65) für den Eigen-Zeitbereich abgeleitet wird, und
eine Anormalsignal-Übertragungseinrichtung (67) zum Übertragen eines Anormalsignals, wenn die Öffnungs-/Schliessungs-Zeit-Bestimmungseinrichtung (66) die tatsächliche Öffnungs-/Schliessungs-Zeit als ausserhalb des Eigen-Öffnungs-/Schliessungs-Zeitbereichs bestimmt.

2. System zur Verwaltung eines Strömungszustandes eines Fluids (K) nach Anspruch 1,
wobei die Ableitungseinrichtung (65) für den Eigen-Zeitbereich so konfiguriert ist, dass sie Folgendes umfasst
eine Minimalwert-Ableitungseinrichtung (68a) zum Ableiten eines Minimalwerts des Eigen-Öffnungs-/Schliessungs-Zeitbereichs aus einer von dem Temperatursensor (S) erfassten Temperatur,
eine Minimalwert-Speichereinrichtung (68b) zum sukzessiven Aktualisieren des von der Minimalwert-Ableitungseinrichtung (68a) abgeleiteten Minimalwerts und zum Speichern des Minimalwerts,
eine Maximalwert-Ableitungseinrichtung (69a) zum Ableiten eines Maximalwerts des Eigen-Öffnungs-/Schliessungs-Zeitbereichs aus einer von dem Temperatursensor (S) erfassten Temperatur, und
eine Maximalwert-Speichereinrichtung (69b) zum sukzessiven Aktualisieren des von der Maximalwert-Ableitungseinrichtung (69a) abgeleiteten Maximalwerts und zum Speichern des Maximalwerts,
wobei die Öffnungs/Schliessungs-Zeit-Bestimmungseinrichtung (66) so konfiguriert ist, dass sie eine Funktion zum Bestimmen enthält, ob die tatsächliche Öffnungs/Schliessungs-Zeit kleiner als der in der Minimalwert-Speichereinrichtung (68b) gespeicherte Minimalwert ist oder nicht, und eine Funktion zum Bestimmen enthält, ob die tatsächliche Öffnungs/Schliessungs-Zeit grösser als der in der Maximalwert-Speichereinrichtung (69b) gespeicherte Maximalwert ist oder nicht, und
wobei die Anormalsignal-Übertragungseinrichtung (67) so konfiguriert ist, dass sie eine Funktion zum Übertragen eines Anormalsignals enthält, wenn die Öffnungs/Schliessungs-Zeit-Bestimmungseinrichtung (66) bestimmt, dass die Eigen-Öffnungs/Schliessungs-Zeit kleiner als der Minimalwert oder grösser als der Maximalwert ist.

3. System zur Verwaltung eines Strömungszustandes eines Fluids (K) nach Anspruch 1 oder 2,
wobei die Verwaltungseinheit (60) eine vorläufige Ventilelement-Erfassungseinrichtung (70) aufweist, um zu erfassen, ob das Ventilelement (40) des Strömungsdetektors (30) vor dem Antrieb der Fluidzuführungsvorrichtung (J) geschlossen ist oder nicht, und
die Anormalsignal-Übertragungseinrichtung (67) so konfiguriert ist, dass sie eine Funktion zum Übertragen eines Anormalsignals enthält, wenn die vorläufige Ventilelement-Erfassungseinrichtung (70) erfasst, dass das Ventilelement (40) des Strömungsdetektors (30) nicht geschlossen ist.

4. System zur Verwaltung eines Strömungszustandes eines Fluids (K) nach einem der Ansprüche 1 bis 3,
wobei die Verwaltungseinheit (60) eine Erfassungsfehler-Erkennungseinrichtung (71) zum Erkennen eines Erfassungsfehlers aufweist, wenn die Öffnungs-/Schliess-Erfassungseinrichtung (61) ein Öffnen des Ventilelements (40) des Strömungsdetektors (30) nicht innerhalb einer durch die Erfassungs-Zeit-Festlegungsmittel (62) festgelegten Zeit erfasst oder ein Schliessen nicht erfasst, selbst wenn die Öffnungs-/Schliess-Erfassungseinrichtung (61) ein Öffnen erfasst, und
wobei die Anormalsignal-Übertragungseinrichtung (67) so konfiguriert ist, dass sie eine Funktion zum Übertragen eines anormalen Signals enthält, wenn die Erfassungsfehler-Erkennungseinrichtung (71) einen Erfassungsfehler erkennt.

5. System zur Verwaltung eines Strömungszustandes eines Fluids (K) nach einem der Ansprüche 1 bis 4,
wobei das Erfassungs-Zeit-Festlegungsmittel (62) durch einen Zeitgeber konfiguriert ist, der auf der Grundlage des Antriebs der Fluidzuführungsvorrichtung (J) betrieben wird und eine Betriebszeit als eine Erfassungszeit hat, die darauf eingestellt ist.

6. System zur Verwaltung eines Strömungszustandes von Fluid (K) nach einem der Ansprüche 1 bis 5,
wobei der Strömungsdetektor (30) einen Körper (32) mit einem Fluidraum (E) aufweist, der eine zylindrische Innenfläche hat, durch die ein Fluid hindurchtreten kann,
wobei ein Zuführungsanschluss (34) für Fluid, der eine Zuführungsöffnung (33) aufweist, die auf einer Mittelachse des Fluidraums (E) an einem Ende des Fluidraums (E) zentriert ist, in dem Körper (32) ausgebildet ist,
wobei ein Auslassanschluss für Fluid, der eine Auslassöffnung (35) aufweist, die mit dem Fluidraum (E) in Verbindung steht, in dem Körper (32) ausgebildet ist,
wobei eine Elektrode (Da), die einen an einer Endseite des Fluidraums (E) freiliegenden Kontakt aufweist und aus einem Leiter besteht, in dem Körper (32) vorgesehen ist,
wobei eine andere Elektrode, die einen an einer anderen Endseite des Fluidraums (E) freiliegenden Kontaktteil (38) aufweist, die von der einen Elektrode (Da) isoliert ist und aus einem Leiter besteht, in dem Körper (32) vorgesehen ist,
wobei ein Ventilelement (40), das entlang der Mittelachse des Fluidraums (E) bewegt wird, mit dem Kontakt der einen Elektrode (Da) in Kontakt kommt, um die Zuführöffnung (33) zu schliessen, sich von dem Kontakt löst, um die Zuführungsöffnung (33) zu öffnen, und aus einem Leiter besteht, in dem Fluidraum (E) untergebracht ist,
wobei eine Schraubenfeder (41), die an einem Ende mit dem Ventilelement (40) verbunden ist und an einem anderen Ende mit dem freiliegenden Kontaktteil (38) der anderen Elektrode (Db) verbunden ist, um das Ventilelement (40) immer in eine Richtung des Schliessens der Zuführungsöffnung (33) zu drängen, und die aus einem Leiter besteht, in dem Fluidraum (E) gelagert ist,
und der Strömungsdetektor (30) so konfiguriert ist, dass er eine Strömung des Fluids durch elektrisches Erfassen einer Verbindung erfasst, wenn das Ventilelement (40) einer elektrischen Schaltung, die durch die eine Elektrode (Da), das Ventilelement (40), die Schraubenfeder (41) und die andere Elektrode (Db) konfiguriert ist, geschlossen ist, und durch eine Unterbrechung, wenn das Ventilelement (40) geöffnet ist.

7. System zur Verwaltung eines Strömungszustandes eines Fluids (K) nach einem der Ansprüche 1 bis 6,
wobei der Temperatursensor (S) an dem Durchflussdetektor (30) angebracht ist.

8. System zur Verwaltung eines Strömungszustandes eines Fluids (K) nach Anspruch 6,
wobei der Strömungsdetektor (30) mit einem Befestigungsabschnitt (50) zur Befestigung des Temperatursensors (S) versehen ist.

## Revendications

1. Système de gestion d'un état d'écoulement d'un fluide (K), comprenant un détecteur d'écoulement (30) qui comprend un corps (32) ayant un espace de fluide (E) qui est alimenté avec un fluide provenant d'un dispositif d'alimentation en fluide (J) à partir d'une ouverture d'alimentation (33), par l'entraînement du dispositif d'alimentation en fluide (J), et décharge le fluide à partir d'une ouverture de décharge (35) logée dans l'espace de fluide (E) du corps (32), un élément de soupape (40) configuré pour fermer l'ouverture d'alimentation (33) lorsque le fluide n'est pas fourni, et pour ouvrir l'ouverture d'alimentation (33) lorsque le fluide est fourni, et détecte un écoulement du fluide par l'ouverture et la fermeture de l'élément de soupape (40), et
une unité de gestion (60) pour détecter l'ouverture et la fermeture de l'élément de soupape (40) du détecteur d'écoulement (30) et pour gérer un état d'écoulement du fluide dans l'espace de fluide (E) du corps (32),
dans lequel le système comprend un capteur de température (S) pour détecter une température du fluide,
**caractérisé en ce que**
l'unité de gestion (60) comprend
des moyens de détection d'ouverture/fermeture (61) pour détecter l'ouverture et la fermeture de l'élément de soupape (40) du détecteur d'écoulement (30),
des moyens de spécification de temps de détection (62) pour spécifier un temps de détection des moyens de détection d'ouverture/fermeture (61),
un moyen de calcul de temps d'ouverture/fermeture réel (63) pour calculer un temps jusqu'à ce que le moyen de détection d'ouverture/fermeture (61) détecte la fermeture après que le moyen de détection d'ouverture/fermeture (61) détecte l'ouverture comme un temps d'ouverture/fermeture réel, lorsque le moyen de détection d'ouverture/fermeture (61) détecte l'ouverture de l'élément de soupape (40) du détecteur d'écoulement (30) et détecte la fermeture de l'élément de soupape (40) du détecteur d'écoulement (30) dans un temps de détection spécifié par le moyen de spécification de temps de détection (62),
un moyen de stockage de corrélation (64) pour stocker une corrélation entre la température du fluide et une plage de temps d'ouverture/fermeture appropriée qui est appropriée de l'élément de soupape (40),
des moyens de dérivation de plage de temps appropriée (65) pour dériver une plage de temps d'ouverture/fermeture appropriée dans une température détectée par le capteur de température (S) à partir des moyens de stockage de corrélation (64),
un moyen de détermination du temps d'ouverture/fermeture (66) pour déterminer si le temps d'ouverture/fermeture réel calculé par le moyen de calcul du temps d'ouverture/fermeture réel (63) est à l'intérieur ou à l'extérieur de la plage de temps d'ouverture/fermeture appropriée dérivée par le moyen de dérivation de plage de temps appropriée (65), et
un moyen de transmission de signal anormal (67) pour transmettre un signal anormal lorsque le moyen de détermination de temps d'ouverture/fermeture (66) détermine que le temps d'ouverture/fermeture réel est en dehors de la plage de temps d'ouverture/fermeture appropriée.

2. Système de gestion d'un état d'écoulement d'un fluide (K) selon la revendication 1,
dans lequel le moyen de dérivation de la plage de temps appropriée (65) est configuré pour inclure
un moyen de dérivation de valeur minimale (68a) pour dériver la valeur minimale de la plage de temps d'ouverture/fermeture appropriée à partir d'une température détectée par le capteur de température (S),
des moyens de stockage de valeur minimale (68b) pour mettre à jour successivement la valeur minimale dérivée par les moyens de dérivation de valeur minimale (68a) et pour stocker la valeur minimale,
un moyen de dérivation de valeur maximale (69a) pour dériver une valeur maximale de la plage de temps d'ouverture/fermeture appropriée à partir d'une température détectée par le capteur de température (S), et
des moyens de stockage de valeur maximale (69b) pour mettre à jour successivement la valeur maximale dérivée par les moyens de dérivation de valeur maximale (69a) et pour stocker la valeur maximale,
dans lequel le moyen de détermination du temps d'ouverture/fermeture (66) est configuré pour inclure une fonction de détermination si oui ou non le temps d'ouverture/fermeture réel est inférieur à la valeur minimale stockée dans le moyen de stockage de valeur minimale (68b), et inclure une fonction de détermination si oui ou non le temps d'ouverture/fermeture réel est supérieur à la valeur maximale stockée dans le moyen de stockage de valeur maximale (69b), et
dans lequel le moyen de transmission de signal anormal (67) est configuré pour inclure une fonction de transmission d'un signal anormal lorsque le moyen de détermination du temps d'ouverture/fermeture (66) détermine que le temps d'ouverture/fermeture réel est inférieur à la valeur minimale ou supérieur à la valeur maximale.

3. Système de gestion d'un état d'écoulement d'un fluide (K) selon la revendication 1 ou 2,
dans lequel l'unité de gestion (60) comprend un moyen de détection préliminaire d'élément de soupape (70) pour détecter si oui ou non l'élément de soupape (40) du détecteur d'écoulement (30) est fermé avant l'entraînement du dispositif d'alimentation en fluide (J), et
le moyen de transmission de signal anormal (67) est configuré pour inclure une fonction de transmission d'un signal anormal lorsque le moyen de détection préliminaire d'élément de soupape (70) détecte que l'élément de soupape (40) du détecteur d'écoulement (30) n'est pas fermé.

4. Système de gestion d'un état d'écoulement d'un fluide (K) selon l'une quelconque des revendications 1 à 3,
dans lequel l'unité de gestion (60) comprend des moyens de reconnaissance d'erreur de détection (71) pour reconnaître une erreur de détection lorsque les moyens de détection d'ouverture/fermeture (61) ne détectent pas l'ouverture de l'élément de vanne (40) du détecteur d'écoulement (30) dans un temps spécifié par les moyens de spécification de temps de détection (62) ou ne détectent pas la fermeture même lorsque les moyens de détection d'ouverture/fermeture (61) détectent l'ouverture, et
dans lequel le moyen de transmission de signal anormal (67) est configuré pour inclure une fonction de transmission d'un signal anormal lorsque le moyen de reconnaissance d'erreur de détection (71) reconnaît une erreur de détection.

5. Système de gestion d'un état d'écoulement d'un fluide (K) selon l'une quelconque des revendications 1 à 4,
dans lequel le moyen de spécification de temps de détection (62) est configuré par une minuterie qui est actionnée sur la base de l'entraînement du dispositif d'alimentation en fluide (J) et a un temps de fonctionnement en tant que temps de détection réglé sur celui-ci.

6. Système de gestion d'un état d'écoulement d'un fluide (K) selon l'une quelconque des revendications 1 à 5,
dans lequel le détecteur d'écoulement (30) comprend un corps (32) ayant un espace de fluide (E) ayant une surface intérieure cylindrique permettant à un fluide de passer à travers,
dans lequel un orifice d'alimentation (34) de fluide, qui a une ouverture d'alimentation (33) centrée sur un axe central de l'espace de fluide (E) à une extrémité de l'espace de fluide (E), est formé dans le corps (32),
dans lequel un orifice de décharge de fluide, qui a une ouverture de décharge (35) communiquant avec l'espace de fluide (E), est formé dans le corps (32),
dans lequel une électrode (Da) qui a un contact exposé sur un côté d'extrémité de l'espace de fluide (E) et qui est constituée d'un conducteur, est prévue dans le corps (32),
dans lequel une autre électrode qui a une partie d'exposition (38) exposée sur un autre côté d'extrémité de l'espace de fluide (E), est isolée de la première électrode (Da) et est constituée d'un conducteur, est prévue dans le corps (32),
dans lequel un élément de soupape (40) qui est déplacé le long de l'axe central de l'espace de fluide (E), vient en contact avec le contact de l'électrode (Da) pour fermer l'ouverture d'alimentation (33), s'éloigne du contact pour ouvrir l'ouverture d'alimentation (33), et est constitué d'un conducteur, est stocké dans l'espace de fluide (E),
dans lequel un ressort hélicoïdal (41) qui est connecté à l'élément de soupape (40) à une extrémité et est connecté à la partie d'exposition (38) de l'autre électrode (Db) à une autre extrémité pour toujours pousser l'élément de soupape (40) dans une direction de fermeture de l'ouverture d'alimentation (33), et est constitué d'un conducteur, est stocké dans l'espace de fluide (E),
et dans lequel le détecteur d'écoulement (30) est configuré pour détecter l'écoulement du fluide en détectant électriquement la connexion lorsque l'élément de soupape (40) d'un circuit électrique configuré par la première électrode (Da), l'élément de soupape (40), le ressort hélicoïdal (41) et l'autre électrode (Db) est fermé, et la déconnexion lorsque l'élément de soupape (40) est ouvert.

7. Système de gestion d'un état d'écoulement d'un fluide (K) selon l'une quelconque des revendications 1 à 6,
dans lequel le capteur de température (S) est fixé sur le détecteur d'écoulement (30).

8. Système de gestion d'un état d'écoulement d'un fluide (K) selon la revendication 6,
dans lequel le détecteur d'écoulement (30) est muni d'une partie de fixation (50) pour fixer le capteur de température (S).
